(19) Europäisches Patentamt
European Patent Office
Office européen des brevets

(11) Veröffentlichungsnummer: **0 342 311 A2**

(12) **EUROPÄISCHE PATENTANMELDUNG**

(21) Anmeldenummer: **89101558.8**

(51) Int. Cl.⁴: **C08G 77/42**

(22) Anmeldetag: **30.01.89**

(30) Priorität: **18.05.88 DE 3816830**

(43) Veröffentlichungstag der Anmeldung: **23.11.89 Patentblatt 89/47**

(84) Benannte Vertragsstaaten: **AT BE DE ES FR GB IT NL**

(71) Anmelder: **Firma Carl Freudenberg**
**Höhnerweg 2-4**
**D-6940 Weinheim/Bergstrasse(DE)**

(72) Erfinder: **Vogt, Ulrike, Dr.**
**Karlstrasse 1c**
**D-6103 Griesheim(DE)**
Erfinder: **Wenneis, Wolffried, Dr.**
**A 3, 7**
**D-6800 Mannheim(DE)**

(74) Vertreter: **Weissenfeld-Richters, Helga, Dr.**
**Höhnerweg 2-4**
**D-6940 Weinheim/Bergstrasse(DE)**

(54) **Siliciumhaltige Pfropfelastomere und Verfahren zu ihrer Herstellung.**

(57) Es werden beschrieben Pfropfelastomere aus elastomeren Polymerisaten als Pfropfgrundlage und aufgepfropften Einheiten der Formel

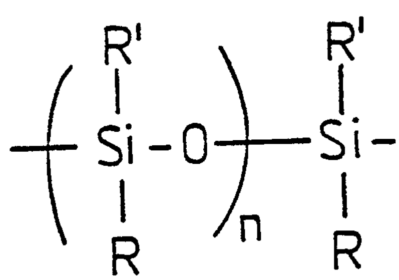

mit n = 10 bis 400
oder der Formel

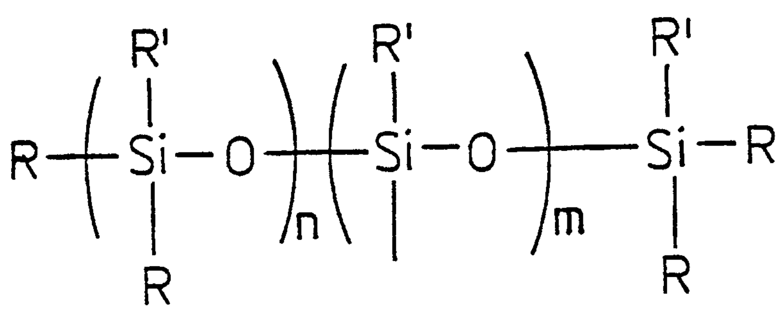

mit (n:m) ≥ (10:1). Ferner wird ein einstufiges Verfahren zur Herstellung angegeben.

**EP 0 342 311 A2**

Xerox Copy Centre

Fig. 1

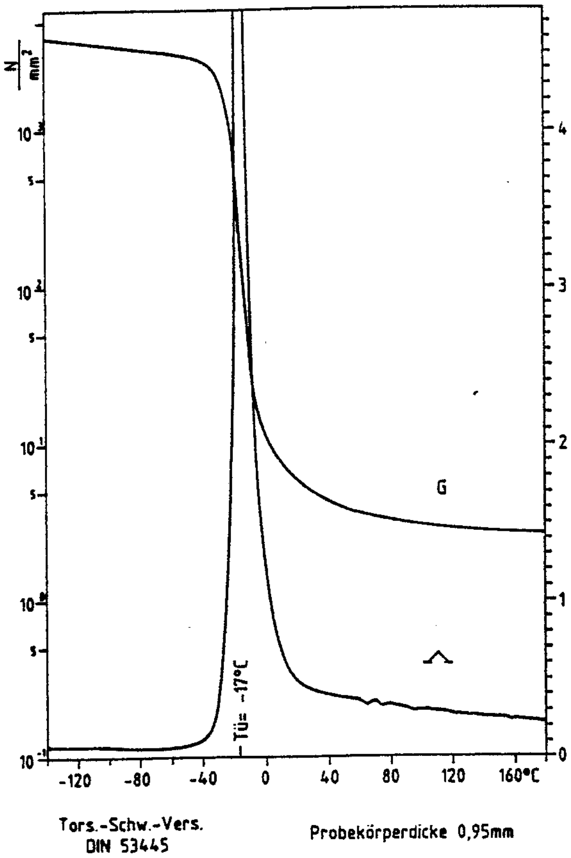
N/mm²
10⁴
5
10³
5
10²
5
10¹
5
10⁰
5
10⁻¹
4
3
2
1
0
G
Λ
Tü= -17°C
-120
-80
-40
0
40
80
120
160°C
Tors.-Schw.-Vers.
DIN 53445
Probekörperdicke 0,95mm

## Siliciumhaltige Pfropfelastomere und Verfahren zu ihrer Herstellung

Die Erfindung befaßt sich mit Pfropfelastomeren, bei denen auf eine Pfropfgrundlage aus einem elastomeren Homo- oder Copolymerisat Siliconeinheiten aufgepfropft sind, sowie mit einem Verfahren zur Herstellung dieser Elastomere.

Die DE-OS 28 56 836 beschreibt gattungsgemäße Pfropfpolymerisate mit einem Siliciumgehalt von 0,1 bis 20 Gew.-% aus einer Pfropfgrundlage mit eingebauten Vinylester- und/oder Vinylalkohol-Einheiten, auf die $-Si(R,R')-O-$ -Einheiten gepfropft sind. Die Produkte haben gute Tieftemperatureigenschaften, sind jedoch auf Vinylpolymerisate beschränkt. Eine je nach Verwendungszweck freie Elastomerenauswahl (z.B. sind Vinylacetat-Elastomere gegen Mineralöl nicht beständig, also ungeeignet für Wellendichtringe) ist also nicht möglich. Das Herstellungsverfahren erfordert eine dreistufige Vorgehensweise: Verseifung zum Alkohol/Polymerisation mit gleichzeitiger Pfropfung/Isolierung (Entfernen der freigewordenen Carbonsäure).

Neben dem resultierenden hohen Arbeits- und Geräteaufwand erfordert ein solches Verfahren Spezialmaschinen und kann von nur mit Kenntnissen in konventioneller Elastomerenherstellung ausgestattetem Personal nicht ohne spezielle Schulung durchgeführt werden.

Die vorliegende Erfindung hat zur Aufgabe, solche aufzupfropfenden Siliconeinheiten anzugeben, die es ermöglichen, den Herstellungsprozeß technisch wesentlich zu vereinfachen und bei deren Einsatz volle Freiheit in der Wahl der elastomeren Pfropfgrundlage besteht.

Die Begriffe "Aufpfropfen" bzw. "Pfropfpolymerisation" sind dem einschlägigen Fachmann geläufig und bezeichnen das Verfahren zur Herstellung von Pfropfpolymeren, bei dem auf einer bereits makromolekular vorliegenden Verbindung die Polymerisation unter Einsatz eines anders gearteten Monomeren oder Oligomeren fortgesetzt wird, wobei dessen Moleküle auf die Kette des Makromoleküls als Seitenketten "aufgepfropft" werden.

Die Lösung der gestellten Aufgabe besteht in der Angabe von Elastomeren, deren aufgepfropfte Siliconeinheiten die kennzeichnenden Merkmale des Anspruchs 1 aufweisen. Das erfindungsgemäße Verfahren wird einstufig, kontinuierlich und nach den üblichen, in der Gummiherstellung eingeführten Techniken durchgeführt, wobei die mit Patentanspruch 2 gekennzeichneten Siliconoligomeren verwendet werden und wobei die Pfropfung neuerungsgemäß während der herkömmlichen Misch- und Polymerisationsvorgänge erfolgt.

Die erfindungsgemäß verwendeten Siliconoligomeren müssen die Struktur I

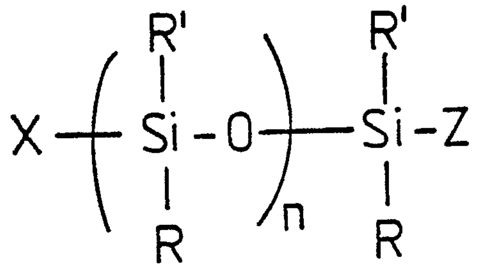

(I)

mit $n = 10$ bis 400, $X = Z$ oder R oder $R'$,
oder die Struktur II

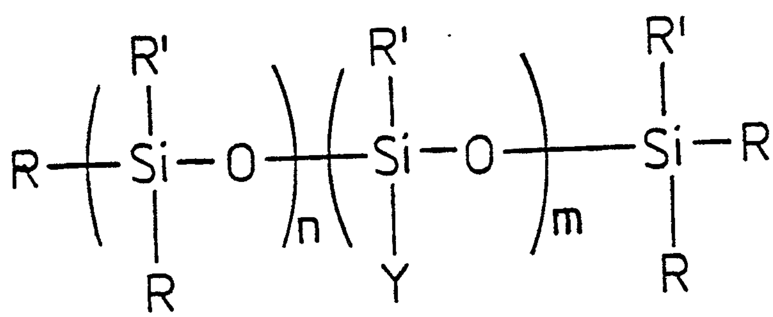

(II)

mit (n:m) ≥ (10:1)
besitzen, wobei jeweils R und R′ gleiche oder verschiedene, substituierte oder unsubstituierte aliphatische, cycloaliphatische, monoolefinische oder aromatische Reste mit 1 bis 10 Kohlenstoffatomen darstellen.

Die reaktiven Substituenten X, Y und Z müssen naturgemäß so ausgewählt werden, daß sie jeweils mit den reaktiven Zentren des als Pfropfgrundlage dienenden Elastomerensystems reagieren können:
So erfolgt die Siliconpfropfung von Acrylatkautschuk, der aus Ethylacrylat-, Butylacrylat- und Methoxyethylacrylat-Monomeren sowie 3 Molprozent Chlorethylvinylethergruppen aufgebaut ist, zweckmäßig unter Verwendung von epoxyfunktionellen Siliconoligomeren gemäß der
Formel (I) mit X = Z = -epoxy- und n = 250.

Ein wesentliches, vorteilhaftes Charakteristikum der erfindungsgemäßen Silicon-Pfropfelastomere ist, daß tieftemperaturfeste, d.h. bei tiefer Temperatur flexible, Produkte nunmehr aus allen Standardkautschuken als Pfropfgrundlage verfügbar sind und diese je nach dem gewünschten, kautschukspezifischen vorteilhaften Anwendungsbereich ausgewählt werden können.

Solche Standardkautschuke sind beispielsweise EPDM, NBR, ACM, AEM, FKM, CR, SBR, CSM, NR oder ECO.

Die Mengenverhältnisse der eingesetzten Kautschukmischungen einschließlich der Zusatzstoffe sind für die vorliegende Erfindung völlig unkritisch, d.h. es können die individuellen Rezepturen des Verarbeiters beibehalten werden.

Die Mengen an aufgepfropften Silicon-Oligomeren betragen erfindungsgemäß 5 bis 30 Gewichtsteile (bezogen auf 100 Gewichtsteile Kautschukpolymer).

Ferner können die bestehenden Vorrichtungen für die Elastomerverarbeitung, wie Kneter oder Extruder, ohne Modifikationen benutzt werden, wodurch es möglich ist, auf derselben Anlage wahlweise die erfindungsgemäßen Pfropfelastomeren wie auch konventionelle Elastomerwerkstoffe herzustellen. Daher entfällt auch eine spezielle Schulung des diese Anlagen bedienenden Personals.

Die Herstellung der silicongepfropften Elastomeren erfolgt in einem kontinuierlichen Einstufenverfahren unter Verwendung von in der Kautschuk- und Gummiindustrie gebräuchlichen Knetern oder Extrudern, wobei das durch die Erfindung gekennzeichnete Siliconoligomere wie ein weiterer Mischungsbestandteil nach dem Plastifizieren zugegeben wird, so daß die Pfropfreaktion während des Mischens ablaufen kann. Hierzu sind Massetemperaturen von 100 bis 150 °C erforderlich, die in den konventionellen Maschinen leicht zu erreichen sind.

Dabei wird zunächst das als Pfropfgrundlage dienende Elastomer in den Kneter gegeben. Dieser wird so temperiert, daß in der Masse eine Temperatur von 100 bis 150 °C erreicht wird. Nach dem Plastifiziervorgang, das ist nach etwa 2 Minuten, werden 5 bis 30 Teile (jeweils bezogen auf 100 Teile des als Pfropfgrundlage dienenden Elastomeren) reaktives Siliconoligomer der Formel (I) oder (II) in den Kneter gegeben. Gleichzeitig mit dem Mischungsvorgang setzt die Pfropfreaktion ein, welche in der Regel nach etwa 5 Minuten abgeschlossen ist.

Anschließend erfolgt unter Mischen/Kneten die Zugabe weiterer in der Kautschukindustrie üblicher Mischungsbestandteile, wobei je nach angewandter Rezeptur Füllstoffe, Weichmacher, Verarbeitungshilfsmittel, Antioxidantien, Beschleuniger und/oder Vernetzer zum Einsatz kommen und die Vulkanisation des betreffenden Gemisches konventionell abläuft.

Die Rohmischung kann dann - unter weiterer Zugabe von Beschleunigern und Vernetzern - auf ein für die Kautschukherstellung übliches Walzwerk überführt und dort etwa 5 Minuten gewalzt werden.

Sollte das Siliconoligomere nach 5 Minuten noch nicht vollständig ausreagiert haben, so braucht - und dies ist ein weiterer Vorteil der vorliegenden Erfindung - diesem Umstand keine Beachtung geschenkt zu werden, da gegebenenfalls verbleibendes Silicon später von selbst während der Vulkanisationsvorgänge vollends auf die Elastomerengrundlage aufgepfropft wird.

Es ist selbstverständlich möglich, auch Mischungen von Siliconen der Formeln (I) und (II) erfindungsgemäß einzusetzen, ohne daß die Eigenschaften der entstehenden Elastomeren oder die Rezepturwahl hierdurch beeinträchtigt werden. Diese Maßnahme birgt jedoch auch keine signifikanten Vorteile in sich, so daß zweckmäßig die Wahl eines einzigen Silicontyps (I) oder (II) erfolgen wird.

Im folgenden werden zwei die Erfindung nicht beschränkende Rezepturbeispiele angegeben:

Beispiel 1

| | |
|---|---|
| Acrylatkautschuk (ACM), Dichte: 1,10 g/cm³ Mooney-Viskosität ML-4 (100°C): 35 bis 50, Glasübergangstemperatur Tü (nach DIN 53 445): -17°C | 100,0 Teile |
| Siliconoligomer nach Formel (I) mit X = Z = epoxy, R = R′ = Methyl, n = 250 | 10,0 Teile |
| MgO | 0,8 Teile |
| gefällte Kieselsäure | 25,0 Teile |
| aktiviertes Kieselgur | 70,0 Teile |
| Schwefel | 0,3 Teile |
| Natriumstearat | 1,7 Teile |
| Kaliumstearat | 1,8 Teile |

ACM - Kautschuk nach diesem Beispiel kann vor allem als Dichtlippenmaterial für Radialwellendichtringe im Maschinenbau verwendet werden. Er besitzt eine auch bei tiefen Temperaturen ausreichende Flexibilität, wie im folgenden anhand von Zahlenmaterial und Figuren noch belegt werden wird.

Beispiel 2

| | |
|---|---|
| Fluorkautschuk (FKM), Dichte: 1,60 g/cm³, Mooney-Viskosität ML - 4 (100°C):120, Glasübergangstemperatur Tü (nach DIN 53 445): - 3°C | 100,0 Teile |
| Siliconoligomer nach Formel (II) mit Y = vinyl, n = 140, m = 10, R = Methyl, R′ = Phenyl | 5,0 Teile |
| MT-Ruß (N 990), BET-Oberfläche 10 m²/g | 30,0 Teile |
| Dicumylperoxid | 3,0 Teile |
| Triallylisocyanurat | 7,0 Teile |
| Calciumhydroxid | 5,0 Teile |

Solche Silicon - FKM - Vulkanisate sind zweckmäßig verwendbar bei extrem hohen Einsatztemperaturen.

Die beiden Rezepturen sollen deutlich machen, daß es bei Einsatz der erfindungsgemäßen Siliconoligomeren nunmehr möglich ist, völlig verschiedene Kautschuke als Pfropfgrundlage zu wählen bei auch sonst im Rahmen der Kautschuktechnologie freier Rezepturgestaltung bezüglich der Zusatzstoffe.

Die verbesserte Kälteflexibilität erfindungsgemäß silicongepfropfter Elastomerwerkstoffe wird im folgenden anhand von Torsionsschwingungsdiagrammen verdeutlicht.

Es zeigen die Figuren 1 bis 3 jeweils den Verlauf des Schubmoduls G sowie des logarithmischen Dämpfungsdekrementes $\Lambda$ über einen Temperaturbereich von -140 bis +180°C sowie den jeweiligen Glasübergangspunkt $T_{ü}$.

Gemessen wurden identische, gemäß Beispiel 1 gefertigte ACM-Elastomere, lediglich mit dem Unterschied, daß Figur 1 das Meßergebnis einer Probe ohne aufgepfropftes Silicon, Figur 2 das einer Probe mit 10 Teilen und Figur 3 das einer Probe mit 20 Teilen Silicon darstellt. Die Torsionsschwingungsdiagramme wurden nach DIN 53 445 bestimmt, die Probekörperdichte betrug jeweils ca. 0,96 mm.

Ein Modul von Z.B. 3000 N/mm² ist beim reinen ACM-Vulkanisat bereits bei -50°C erreicht; bei Aufpfropfung von 10 Teilen Silicon liegt diese Temperatur bei -100°C, bei 20 Teilen Silicon bei -120°C.

Zusätzlich ist eine deutliche Erniedrigung des Schubmoduls des ACM-Vulkanisates bei tiefen Temperaturen, z.B. -50°C, von 3000 N/mm² (Figur 1) über 2400 N/mm² (Figur 2) bis hin zu 2200 N/mm² (Figur 3) zu erkennen.

Dabei ist eine Erniedrigung des Schubmoduls gleichbedeutend mit einer erhöhten Kälteflexibilität.

Im folgenden wird der Einfluß der Menge an aufgepfropften Siliconeinheiten gemäß der Erfindung auf das Gleitverhalten des fertigen Vulkanisates gezeigt. Die erfindungsgemäßen Siliconeinheiten ergeben Pfropfelastomere mit gegenüber den ungepfropften Vulkanisaten stark verminderten Reibungskoeffizienten.

Mischungen nach Beispiel 1 wurden nach dem vorne beschriebenen Verfahren vulkanisiert, wobei einmal kein, einmal 10 Teile und einmal 20 Teile Siliconoligomer aus Beispiel 1 aufgepfropft wurden. Es wurden Prüfkörper nach DIN 51 387 (Tannert-Wieland-Methode) gefertigt und normgerecht auf ihr jeweiliges Gleitverhalten hin untersucht.

| Prüfbedingungen : | |
|---|---|
| Gleitgeschwindigkeit:<br>Belastung:<br>Gleitpartner:<br>Temperatur: | 3,6 mm/min<br>50 $N/cm^2$<br>gehärteter Stahl von 1 $\mu m$ $R_t$<br>20 °C |

Um etwa 80 % gegenüber dem ungepfropften Elastomer verbesserte Reibwerte erhält man, wenn man 20 Teile Siliconoligomer einsetzt. Die folgende Tabelle zeigt die Änderung der Reibwerte mit dem Siliconanteil:

| | ACM - MISCHUNG | | |
|---|---|---|---|
| | ohne Silicon | +10 Teile Silicon | +20 Teile Silicon |
| $\mu$ (Reibungskoeffizient) | 0,82 | 0,35 | 0,18 |

Die erfindungsgemäß aufgebauten und hergestellten Pfropfpolymerisate können wegen der freien Wählbarkeit der Grundelastomereinheiten allen denkbaren Anforderungen im Maschinenbau angepaßt werden, sei es im Bereich der Schwingungs- und Lagerungs-, sei es im Bereich der Dichtungstechnik.

**Ansprüche**

1. Pfropfelastomere aus einem elastomeren Homo- oder Copolymerisat als Pfropfgrundlage und 5 bis 30 Gew.-%, bezogen auf die Polymergrundkette, aufgepfropften Silicon-Einheiten,
letztere gekennzeichnet durch die Formel

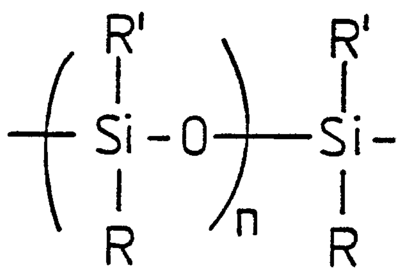

mit n von 10 bis 400
oder die Formel

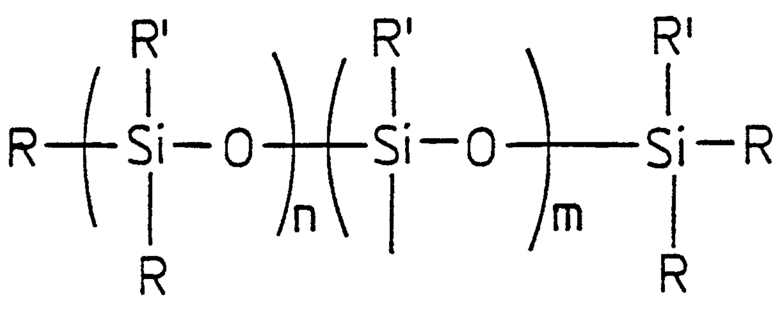

mit (n:m) ≥ (10:1),
wobei jeweils R und R′ gleiche oder verschiedene, substituierte oder unsubstituierte, aliphatische, cycloaliphatische, monoolefinische oder aromatische Reste mit 1 bis 10 Kohlenstoffatomen sind.

2. Verfahren zur Herstellung von mit Siliconeinheiten gepfropften, elastomeren Homo- oder Copolymerisaten als Pfropfgrundlage, wobei man in einem konventionellen Kneter oder Extruder unter beständigem Kneten/Mischen einstufig und kontinuierlich
a) das Grundelastomer bei erhöhter Temperatur plastifiziert,
b) die in der Kautschukherstellung bekannten Füllstoffe, Verarbeitungshilfsmittel, Modifikatoren, Vernetzer und Alterungsschutzmittel gemäß der gewünschten Rezeptur zufügt und
c) gegebenenfalls anschließend das Vulkanisat - unter weiterer Zugabe von Beschleunigern und Vernetzern - aus der Mischvorrichtung direkt auf ein Walzwerk überführt und dort 5 min behandelt,
dadurch gekennzeichnet, daß man den Kneter oder Extruder so temperiert, daß in der Masse eine Temperatur von 100 bis 150 °C vorherrscht, daß man 2 Minuten nach dem Plastifiziervorgang (a) in die Knetorrichtung 5 bis 30 Gewichtsteile, jeweils bezogen auf 100 Teile Grundelastomer, eines reaktiven Siliconoligomeren zugibt mit der Formel

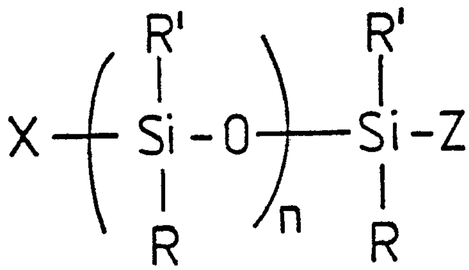

(I) ,

n = 10 bis 400; X = Z oder R oder R′,
oder mit der Formel

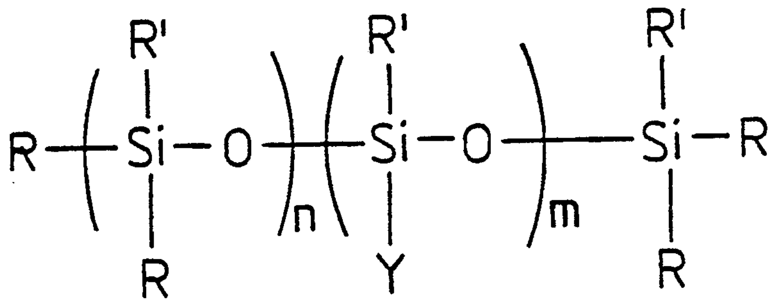

(II)

mit (n:m) ≥ (10:1), wobei jeweils R und R′ gleiche oder verschiedene, substituierte oder unsubstituierte aliphatische, cycloaliphatische, monoolefinische oder aromatische Reste mit 1 bis 10 Kohlenstoffatomen sind und X, Y und Z die bezüglich des jeweils eingesetzten Pfropfgrundlagen-Polymerisates reaktiven Gruppen -vinyl, -acryl, -amino, -epoxy, -mercapto, -carboxyl, -anhydrid oder -SiH bezeichnen, daß man innerhalb 5 Minuten die sofort einsetzende Pfropfreaktion ablaufen läßt und daß man sodann Schritt b) anschließt.

Fig. 1

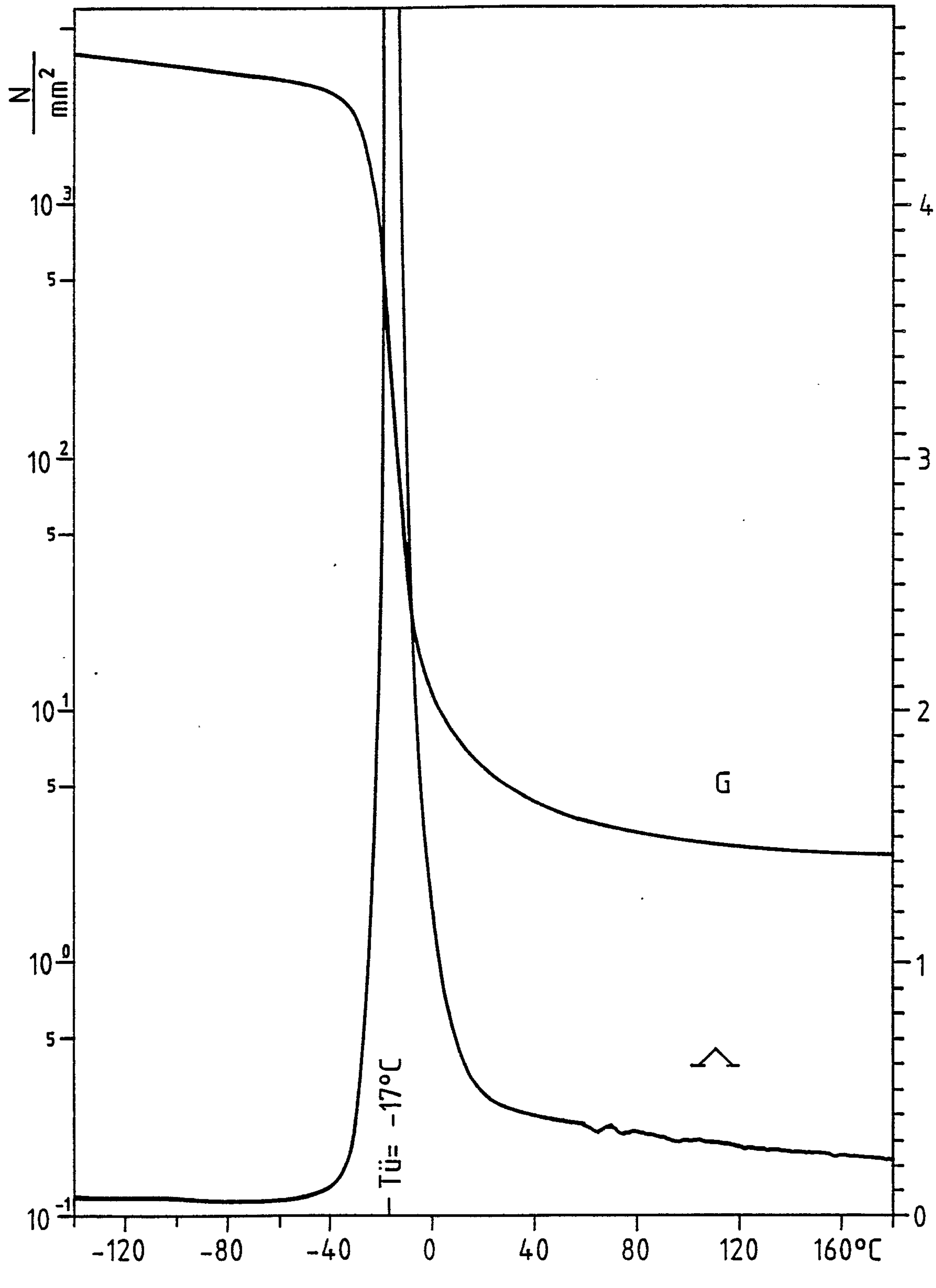


Tors.-Schw.-Vers.
DIN 53445

Probekörperdicke 0,95mm

Fig. 2

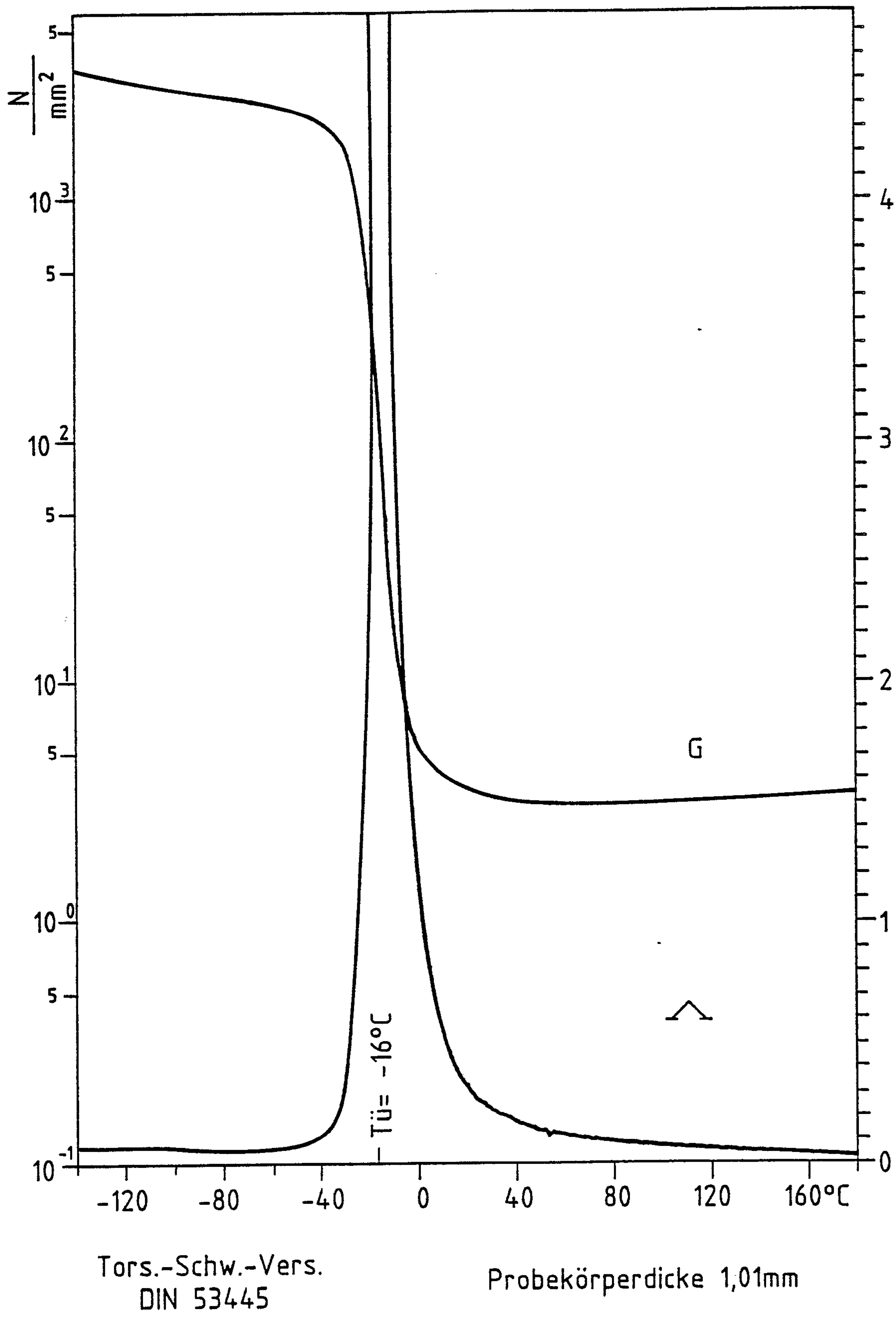
N/mm²
5
10³
5
10²
5
10¹
5
10⁰
5
10⁻¹
4
3
2
1
0
G
Λ
Tü= -16°C
-120
-80
-40
0
40
80
120
160°C
Tors.-Schw.-Vers.
DIN 53445
Probekörperdicke 1,01mm

Fig. 3

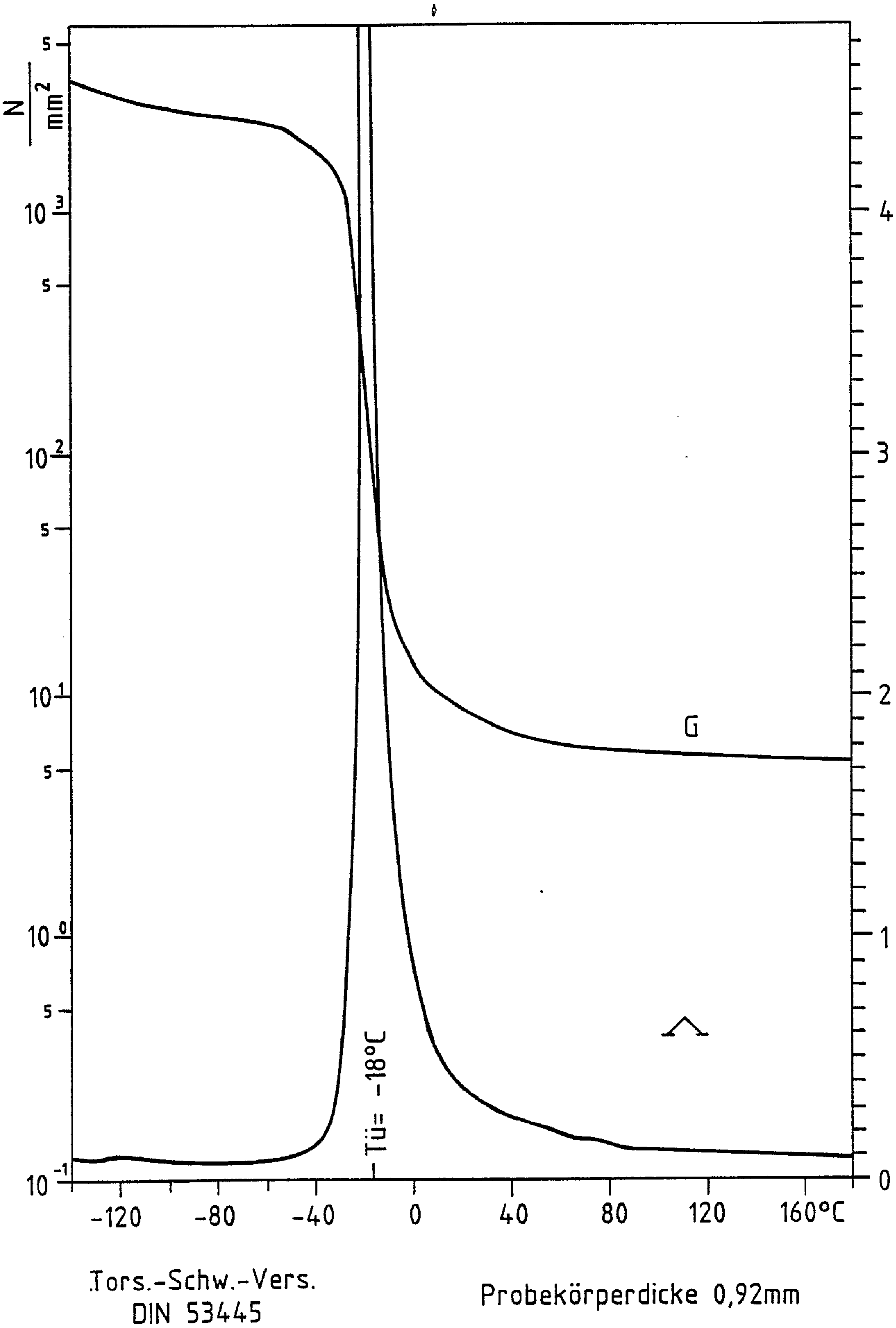
N/mm²
5
10³
5
10²
5
10¹
5
10⁰
5
10⁻¹
4
3
2
1
0
G
Tü= -18°C
-120
-80
-40
0
40
80
120
160°C
Tors.-Schw.-Vers.
DIN 53445
Probekörperdicke 0,92mm